(19) Europäisches Patentamt
European Patent Office
Office européen des brevets

(11) EP 4 559 964 B1

(12) **EUROPÄISCHE PATENTSCHRIFT**

(45) Veröffentlichungstag und Bekanntmachung des Hinweises auf die Patenterteilung:
**05.08.2026 Patentblatt 2026/32**

(21) Anmeldenummer: **23211747.3**

(22) Anmeldetag: **23.11.2023**

(51) Internationale Patentklassifikation (IPC):
***C08L 9/00*** (2006.01) ***B60C 1/00*** (2006.01)
***C08K 5/17*** (2006.01) ***C08L 21/00*** (2006.01)

(52) Gemeinsame Patentklassifikation (CPC):
**C08L 21/00; B60C 1/00; C08K 5/17; C08K 5/3415; C08L 9/00**

(54) **AMINDERIVATE ALS ADDITIV IN KAUTSCHUKEN**

AMINE DERIVATIVES AS ADDITIVES IN RUBBERS

DÉRIVÉS D'AMINES COMME ADDITIFS DANS DES CAOUTCHOUCS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**28.05.2025 Patentblatt 2025/22**

(73) Patentinhaber: **BASF SE**
**67056 Ludwigshafen am Rhein (DE)**

(72) Erfinder:
- **WESP, Svenja**
  **67056 Ludwigshafen am Rhein (DE)**
- **MUSTONEN, Tero**
  **67056 Ludwigshafen am Rhein (DE)**
- **FELDMANN, Oliver**
  **67056 Ludwigshafen am Rhein (DE)**
- **RAMADANI, Fehime**
  **67056 Ludwigshafen am Rhein (DE)**
- **LEDERHOSE, Paul**
  **67056 Ludwigshafen am Rhein (DE)**

(74) Vertreter: **BASF IP Association**
**BASF SE**
**GBI - Z078**
**67056 Ludwigshafen (DE)**

(56) Entgegenhaltungen:
**WO-A1-2022/223345** **US-A1- 2010 222 478**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft die Verwendung verschiedener Aminderivate als Additive in Kautschuken zur Verbesserung von Eigenschaften von Fahrzeugreifen.

Bei modernen Fahrzeugreifen werden erhöhte Anforderungen an deren Eigenschaften nicht zuletzt unter Nachhaltigkeitsaspekten gestellt, insbesondere an einen geringen Rollwiderstand, um den Kraftstoffverbrauch und damit verbundene Emissionen zu senken, und eine hohe Abriebsfestigkeit, um die Emission von Reifenabrieb an die Umgebung zu verringern und die Lebensdauer der Reifen zu erhöhen, ohne gleichzeitig die Haftung der Reifen auf dem Untergrund unter verschiedenen Bedingungen (z.B. Temperatur, Wetterbedingungen, Straßenzustand) zu verschlechtern.

In den Kautschukmassen können die Fahrzeugreifen zur Verbesserung dieser Eigenschaften verschiedene Füllmaterialien sowie Vulkanisationsbeschleuniger enthalten. Bei den Füllmaterialien handelt es sich häufig um anorganische Materialien, wie Ruß, Silikate oder Zinkoxid, bei den Kautschuken dagegen um unpolare Polymere, somit ist die Mischbarkeit und Verträglichkeit dieser Komponenten aufgrund ihrer unterschiedlichen Polarität oftmals schlecht. Bei anderen Additiven, wie Vulkanisationsbeschleunigern und -aktivatoren, Antioxidantien sowie Plastifizierern, ist eine einheitliche Verteilung innerhalb des Kautschuks erforderlich, damit sie gleichmäßig ihre Wirkung entfalten können.

Somit besteht ein Bedarf an Additiven, mit denen Füllmaterialien, wie Ruß, Silikate oder Zinkoxid, sowie die anderen genannten Additive besser in Kautschuke eingearbeitet werden können und die Funktionen in den Kautschuken bzw. bei deren Herstellung erfüllen können, beispielsweise als Antioxidans, Aktivator oder Plastifizierer.

Ferner werden bei der Herstellung von Kautschukmassen für Reifen für die bessere Vermischung von Ruß bzw. Silica oftmals Silane als Prozesshilfsmittel eingesetzt, die im Verlauf des Prozesses Alkohole, besonders Ethanol freisetzen. Dies stellt aus arbeitsschutzrechtlichen sowie Umweltaspekten eine zu vermeidende oder zu verringernde Emission dar.

US 2008/0214718 A1 beschreibt den Einsatz von Polyisobutenderivaten zur Dispergierung von Metalloxiden, wie z.B. ZnO, in Polymeren, z.B. Polychloropren-, Urethan-Acryl- oder Acryllatices. Beispiele solcher Polyisobutenderivate sind Umsetzungsprodukte von polyisobutenylsubstituierter Bernsteinsäure (PIBSA) mit Polyaminen, wie Triethylentetraamin, zur Hydrophobierung von Zinkoxid in Dispersionen. Anwendungen in Kautschuk werden nicht beschrieben.

Kautschuk unterscheidet sich von den beschriebenen Dispersionen schon alleine dadurch, dass es sich um eine durchgehende hydrophobe und organische Matrix handelt, wohingegen sich in Dispersionen wäßrige und organische Phasen abwechseln und durch Phasengrenzen voneinander getrennt sind.

Die Aufgabe wurde gelöst durch die Verwendung von Aminderivaten der Formel

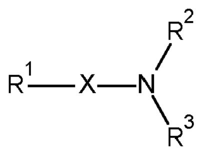

worin

X eine Einfachbindung oder ein organischer Spacer,

$R^1$ ein geradkettiger oder verzweigter Alkenylrest mit einem Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol

$R^2$ und $R^3$ unabhängig voneinander eine weitere Einfachbindung zum organischen Spacer X, Wasserstoff, $C_1$- bis $C_4$-Alkyl, eine Gruppe $-R-NR^4R^5$ oder ein sich wiederholender Rest

$$-[-R-NH-]_x-H$$

x eine positive ganze Zahl von 1 bis 4

R ein zweibindiger organischer, 2 bis 6 Kohlenstoffatome aufweisender organischer Rest, der optional von Sauerstoffatomen unterbrochen sein kann, bevorzugt ausgewählt aus der Gruppe bestehend aus 1,2-Ethylen, 1,2-Propylen und 1,3-Propylen,

$R^4$ und $R^5$ unabhängig Wasserstoff oder $C_1$- bis $C_4$-Alkyl

ist

zur Verbesserung mindestens einer der folgenden Eigenschaften

- Dispersionskoeffizient
- Teilchengröße

- Nasshaftung
- Abriebsfestigkeit
- Rollwiderstand
- Vulkanisierungsgeschwindigkeit

von Kautschuke-enthaltenden Reifen.

In einer bevorzugten Ausführungsform umfasst der Spacer X eine Struktureinheit der Formel

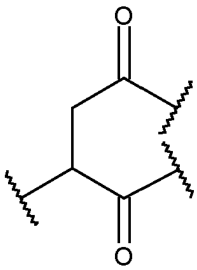

oder

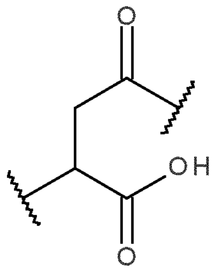

bzw.

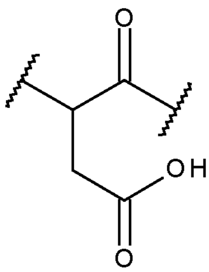

wobei die Bindungsstellen jeweils mit dem Stickstoffatom und dem Rest $R^1$ verbunden sind.

In einer anderen bevorzugten Ausführungsform handelt es sich bei dem Spacer X um eine Einfachbindung.

Bei dem Rest $R^1$ handelt es sich um einen geradkettigen oder verzweigten, bevorzugt verzweigten Alkenylrest mit einem Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol.

Beispiele für $R^1$ sind

- lineares $C_{10}$- bis $C_{30}$-Alkenyl
- verzweigtes $C_9$- bis $C_{30}$-Alkenyl, das durch Polymerisation von $C_3$- und/oder $C_4$-Alkenen erhältlich ist
- verzweigtes Alkenyl, abgeleitet von iso-Buten in einpolymerisierter Form enthaltenden Homo- und Copolymeren mit einem zahlenmittleren Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol.

In einer bevorzugten Ausführungsform umfasst $R^1$ eine Struktureinheit aus der Polymerisation von Isobuten oder einem isobutenhaltigen Monomerengemisch, wie es unten beschrieben ist. Idealisiert handelt es sich bei dem Homopolymer dann bei $R^1$ um einen Rest

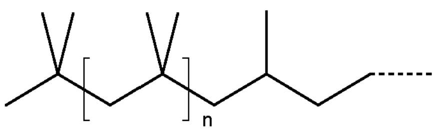

worin n von 0 bis 960, bevorzugt von 0 bis 94, besonders bevorzugt von 1 bis 46 und ganz besonders bevorzugt von 3 bis 22 ist.

In einer weiteren bevorzugten Ausführungsform umfasst $R^1$ eine Struktureinheit aus der Polymerisation von 1- und/oder 2-Buten, besonders 1-Buten oder einem butenhaltigen Monomerengemisch.

In einer weiteren bevorzugten Ausführungsform umfasst $R^1$ eine Struktureinheit aus der Polymerisation von Propen oder einem propenhaltigen Monomerengemisch.

$C_1$- bis $C_4$-Alkyl steht in dieser Anmeldung, wenn nicht ausdrücklich anders bestimmt, bevorzugt für Methyl, Ethyl, n-Propyl oder n-Butyl, bevorzugt Methyl, Ethyl oder n-Butyl, besonders bevorzugt Methyl oder n-Butyl und ganz besonders bevorzugt Methyl.

In einer bevorzugten Ausführungsform sind X eine Einfachbindung und $R^2$ und $R^3$ gleichzeitig Wasserstoff.

In einer weiteren bevorzugten Ausführungsform erfüllt das Aminderivat die Formel

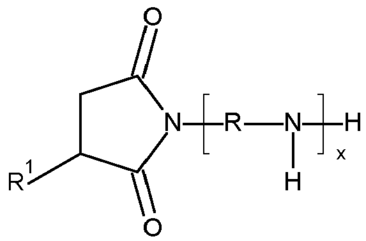

worin

R, $R^1$ und x die obigen Bedeutungen haben.

In dieser bevorzugten Ausführungsform sind X ein organischer Spacer, abgeleitet von Bernsteinsäure, und $R^2$ eine weitere Einfachbindung zum organischen Spacer X und $R^3$ ein sich wiederholender Rest $-[R-NH-]_x-H$ mit R bevorzugt 1,2-Ethylen und x einer positiven ganzen Zahl von 1 bis 4.

In einer weiteren bevorzugten Ausführungsform erfüllt das Aminderivat die Formel

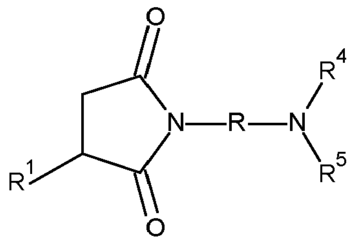

oder

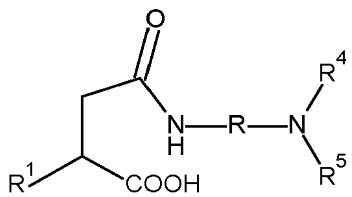

oder

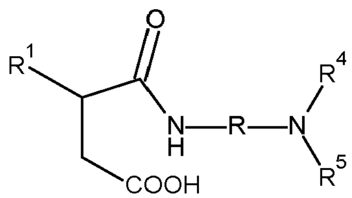

oder Gemischen davon,

worin

R ein zweibindiger Alkylenrest, der optional von Sauerstoffatomen unterbrochen sein kann
$R^1$ ein geradkettiger oder verzweigter Alkenylrest mit 9 bis 200 Kohlenstoffatomen
$R^4$ und $R^5$ unabhängig voneinander Wasserstoff oder $C_1$- bis $C_4$-Alkyl

ist.

In dieser Ausführungsform sind X ein organischer Spacer, $R^2$ Wasserstoff, $R^3$ eine Gruppe -R-$NR^4R^5$, in der R bevorzugt 1,3-Propylen und $R^4$ und $R^5$ jeweils Methyl sind.

In der letzten Ausführungsform liegt das Produkt oft auch im Gemisch mit einer Verbindung vor, in der X ein organischer Spacer, $R^2$ eine weitere Einfachbindung zum organischen Spacer X, $R^3$ eine Gruppe -R-$NR^4R^5$, in der R bevorzugt 1,3-Propylen und $R^4$ und $R^5$ jeweils Methyl sind.

Die Erfindung wird im folgenden näher erläutert:

Kautschuk

In Fahrzeugreifenmischungen, insbesondere für die Laufflächen, werden beispielhaft Mischungen von Butylkautschuk mit Dien-Elastomeren und andere Bestandteile eingesetzt.

Derartige Mischungen sind beispielsweise beschrieben in WO2019/199839 A1, Absatz [0008] bis [0070], was durch Bezugnahme Bestandteil der vorliegenden Offenbarung sei.

Unter den Kautschuken werden im Rahmen dieser Schrift Dien-Elastomere, also Homo- und Copolymere von Dien-Monomeren verstanden, bevorzugt Naturkautschuk, Polybutadiene, Styrol-Butadien-Copolymere und Polyisopren und deren Mischungen, beispielsweise Mischungen aus Naturkautschuk und Styrol-Butadien-Copolymeren, aus Naturkautschuk und Polybutadienen oder Naturkautschuk und Polyisoprenen.

Die Dien-Elastomere weisen in der Regel eine Glasübergangstemperatur Tg von -75 bis 0 °C auf

Polybutadiene

Bei diesen handelt es sich um Polymere von 1,3-Dienen, bevorzugt Buta-1,3-dien mit einer cis-1,4-Verknüpfung von mindestens 90%, bevorzugt mindestens 95%.

Andere Comonomere können in geringen Mengen einpolymerisiert werden.

Das verwendete Elastomer ist vorzugsweise Polybutadien mit mehr als 90% cis-1,4-Verknüpfungen, das nach bekannten Katalyseverfahren mit Übergangsmetallverbindungen erhalten ist, wie beispielsweise in der französischen Patentanmeldung FR-A-1436607 beschrieben ist.

Beispiele für geeignete konjugierte Diene sind insbesondere 1,3-Butadien, Isopren und 2,3-Dimethyl-1,3-butadien. Es können auch aromatische Vinylverbindungen einpolymerisiert werden, geeignete aromatische Vinylverbindungen sind insbesondere Styrol, o-, m- und p-Methylstyrol oder das handelsübliche "Vinyltoluol"-Gemisch.

Styrol-Butadien-Copolymere

Typische Styrol-Butadien-Copolymere weisen einen Gehalt von Styrol von 5 bis 60, bevorzugt 20 bis 50 Gew% auf, wobei die restlichen Comonomere überwiegend 1,3-Butadien sind. Der Gehalt von 1,2-Einheiten beträgt in der Regel 4 bis 80 mol% und der von cis-1,4-Einheiten mehr als 80 mol%.

Denkbar sind such Styrol-Butadien-Isopren-Terpolymere.

Polyisopren

Darunter werden Homo- und Copolymere von Isopren verstanden, die natürlichen oder bevorzugt synthetischen Ursprungs sein können.

Bei diesen beträgt der Anteil von cis-1,4-Einheiten mindestens 90 mol%, bevorzugt mindestens 98 mol%.

Butylkautschuk

Dabei handelt es sich um Copolymere von 85 bis 99,5 mol%, bevorzugt 90 bis 99,5, besonders bevorzugt 95 bis 99,5 mol% $C_4$-$C_7$-Isoolefinen mit 0,5 bis 15 mol%, bevorzugt 0,5 bis 10, besonders bevorzugt 0,5 bis 5 mol% $C_4$-$C_{14}$-konjuguierten Dienen.

Bevorzugtes Isoolefin ist Isobuten, bevorzugte konjugierte Diene sind 1,3-Butadien und Isopren, besonders bevorzugt Isopren.

Der Butylkautschuk weist ein viskositätsmittleres Molekulargewicht von 100000 bis 1500000, bevorzugt 250000 bis 800000 auf.

Die Ausgangsstoffe für die Synthesekautschuke, bevorzugt 1,3-Butadien, Isopren, 2,3-Dimethyl-1,3-butadien, Styrol und/oder Isobuten, besonders bevorzugt 1,3-Butadien, Isopren und/oder Isobuten können zumindest teilweise, bevorzugt vollständig aus nachwachsenden Quellen stammen. Deren Anteil an den gesamten eingesetzten Monomeren, gemessen gemäß ASTM D 6866 (siehe unten), beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Monomeren aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

Plastifizierer

Plastifizierer (Prozeßöle) verbessern die Verarbeitbarkeit der Zusammensetzung, zumeist handelt es sich bei diesen um Ester von aliphatischen Säuren, beispielsweise Fettsäureester und Fettsäureglyceride, bevorzugt natürlich vorkommende Öle, wie Sonnenblumenöl oder Rapsöl, oder Kohlenwasserstoffe, wie paraffinische Öle, aromatische Öle, napthenische Petroleumöle und Polybutenöle.

Weiterhin als Plastifizierer geeignet sind solche Harze, wie sie als Tackifier für Klebstoffe und Farben bekannt sind. Bei diesen handelt es sich bevorzugt um Copolymere von $C_5$-Fraktionen von Naphtha oder Steamcrackerausträgen mit Vinylaromaten, besonders um Copolymere von 1,3-Butadien, 1-Buten, 2-Butenen, 1,2-Butadien, 3-Methyl-1-buten, 1,4-Pentadien, 1-Penten, 2-Methyl-1-buten, 2-Pentene, Isopren, Cyclopentadien, das auch als Dicyclopentadien Dimer vorliegen kann, Piperylen, Cyclopenten, 1-Methylcyclopenten, 1-Hexen, Methylcyclopentadiene oder Cyclohexen. Besonders handelt es sich um Copolymere von Cyclopentadien und/oder Dicyclopentadien mit Vinylaromaten, besonders Styrol, $\alpha$-Methylstyrol, o-, m- oder p-Methylstyrol oder Divinylstyrol. Diese Vinylaromaten sind Bestandteil der $C_9$-Fraktionen von Naphtha oder Steamcrackerausträgen.

Bevorzugte Harze als Plastifizierer sind Cyclopentadien und/oder Dicyclopentadien-Copolymere, Cyclopentadien und/oder Dicyclopentadien-Styrol-Copolymere, Polylimonene, Limonen-Styrol-Copolymere, Limonen- Cyclopentadien und/oder Dicyclopentadien-Copolymere, $C_5$-Fraktions-Styrol-Copolymere sowie $C_5$-Fraktions-$C_9$-Fraktions-Copolymere.

Füllmittel

Beispiele für Füllmittel sind Kalziumcarbonat, Tone, Glimmer, Kieselerde, Silikate, Talkum, Bentonit, Titandioxid, Aluminiumoxid, Zinkoxid und Ruß sein, bevorzugt Zinkoxid, Silikate und Ruß.

Typische Teilchengrößen liegen im Bereich von 0,0001 bis 100 $\mu$m.

Unter Silikaten werden hier Derivate der Kieselsäure verstanden, auch in Form ihrer Kalzium- oder Aluminiumverbindungen. Die Silikate können aus Lösung oder pyrogen erhalten werden und kolloid oder gefällt vorliegen. Bevorzugt werden hochdispergierbare Silikate eingesetzt.

Die BET-Oberfläche beträgt in der Regel weniger als 450 $m^2$/g, bevorzugt 30 bis 400, besonders bevorzugt von 100 bis 250 $m^2$ /g und vorzugsweise von 130 bis 220 $m^2$ /g, eine CTAB-Oberfläche von 100 bis 250 $m^2$ /g und vorzugsweise von 150 bis 200 $m^2$/g, eine ölaufnahme an DBP von 150 bis 250 ml/100 g sowie eine mittlere Projektionsfläche der Aggregate von mehr als 8500 $nm^2$ und vorzugsweise 9000 bis 11000 $nm^2$ vor dem Einsatz und von 7000 bis 8400 $nm^2$ nach dem thermomechanischen Mischen mit einem Elastomer aufweist. Das ausgewählte spezielle Siliciumdioxid kann allein oder in Gegenwart anderer Füllstoffe, wie beispielsweise von Ruß oder eines anderen herkömmlichen Siliciumdioxids, eingesetzt werden.

Als in der besonders geeignetes Siliciumdioxid eignet sich beispielsweise das nach dem in der europäischen Patentanmeldung EP-A-157703 beschriebenen Verfahren erhaltene Siliciumdioxid.

Die BET-Oberfläche, die CTAB-Oberfläche sowie die Ölaufnahme werden nach den in der europäischen Patentanmeldung EP-A-157703 beschriebenen Verfahren gemessen. Die mittlere Projektionsfläche des Siliciumdioxids wird ermittelt nach dem Verfahren wie beschrieben in DE 69206445 T2, Seite 8, letzter Absatz bis Seite 9, erster Absatz.

Antioxidans

Antioxidantien wirken gegen einen oxidativen Abbau, insbesondere sind p-Phenylendiamine zu nennen, beispielsweise N,N'-alkyl- oder aryldisubstituierte p-Phenylendiamine, besonders bevorzugt ist N-(1,3-Dimethylbutyl)-N'-phenyl-1,4-phenylenediamin.

Härter, Vernetzer, Aktivatoren

Die Kautschukzusammensetzungen werden mit Hilfe mindestens eines Härters und mindestens eines Vernetzers umgesetzt, die dem Fachmann auf diesem Gebiet bekannt sind.

Beispiele dafür sind organische Peroxide und Polyamine.

Insbesondere wird dafür Schwefel als Vulkanisierungsagens verwendet.

Als Aktivatoren für den Vulkanisierungsprozeß werden Amine, Diamine, Guanidine, Thioharnstoffe, Thiatole, Thiram, Sulfenamide, Sulfenimide, Thiocarbamate und Xanthate eingesetzt. Besonders geeignet ist N-Cyclohexylbenzothiazol-2-sulfenamid (CBS).

Als Vernetzer können Schwefel, Metalloxide, Fettsäuren, besonders Stearinsäure, und insbesondere Organosilan-Vernetzer (siehe unten bei den Silan-Kopplungsmitteln) eingesetzt werden, beispielsweise Vinyl triethoxysilan, Vinyl-tris-(beta-methoxyethoxy)silan, Methacryloylpropyltrimethoxysilan, gamma-Amino-propyl triethoxysilan, gamma-Mercaptopropyltrimethoxysilan und dergleichen.

In einer besonderen Ausführungsform wird bis-(3-Triethoxysilylpropyl)tetrasulfid eingesetzt.

Als Metalloxide können eingesetzt werden ZnO, CaO, MgO, $Al_2O_3$, $CrO_3$, $TiO_2$, FeO, $Fe_2O_3$ und NiO. Diese können als Oxide oder als die entsprechende Fettsäureverbindung eingesetzt werden, bevorzugt als Stearat.

Unter diesen ist Zinkoxid bevorzugt.

Silan-Kopplungsmittel

Typische Kopplungsmittel sorgen für eine stabile chemische und/oder physikalische Wechselwirkung zwischen den einzelnen Bestandteilen, beispielsweise Füllmittel und Kautschuken.

Typischerweise handelt es sich um Schwefel-haltige Verbindungen, Organosilane oder Polysiloxane.

Bevorzugt sind solche Kopplungsmittel, die eine Polysulfidgruppe und eine Alkoxysilylgruppe tragen, besonders bevorzugt sind Silane polysulfide, beispielsweise Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), wie zum Beispiel Bis(3-trimethoxysilylpropyl) polysulfid oder Bis(3-triethoxysilylpropyl)polysulfid. Weitere Beispiele sind Bis(3-triethoxysilylpropyl)tetrasulfid (TESPT) der Formel $[(C_2H_5O)_3Si(CH_2)_3S_2]_2$, oder Bis(triethoxysilylpropyl)disulfid (TESPD) der Formel $[(C_2H_5O)_3Si(CH_2)_3S]_2$. Andere Beispiele sind Bis(mono($C_1$-$C_4$)alkoxy di($C_1$-$C_4$)alkylsilylpropyl)polysulfid, besonders Disulfide, Trisulfide oder Tetrasulfide), insbesondere Bis(monoethoxydimethylsilylpropyl)tetrasulfid.

Zusammensetzung

Der Butylkautschuk macht beispielsweise in der Laufflächenmischung eine Fahrzeugreifens 5 bis 40, bevorzugt 5 bis 25 phr aus. Mit "phr" (parts per hundred rubber) wird die Zusammensetzung bezogen auf die 100 Massenteile des Polymerblends angegeben.

Polybutadiene können 30 bis 50 phr, Styrol-Butadien-Copolymere 40 bis 70 und Polyisoprene 0 bis 20 phr ausmachen, mit der Maßgabe, daß die Summe dieser Polymere 100 phr ergeben. Alle Nicht-Kautschukbestandteile werden auf die Summe dieser Polymere bezogen.

Der Anteil der Füllmittel, besonders Ruß und Silikate, beträgt in der Regel 20 bis 200 phr, bevorzugt 30 bis 150 phr.

Der Anteil an Plastifizierern beträgt in der Regel 10 bis 30 phr.

Erfindungsgemäß werden diesen Kautschuken die oben bezeichneten Aminderivate zugesetzt, die in einer bevorzugten Ausführungsform polyisobutenylsubstituiert sein können:
Bei dem Polyisobuten, das der Kette zugrundeliegt handelt es sich um iso-Buten in einpolymerisierter Form enthaltende Homo- und Copolymere mit einem zahlenmittleren Molekulargewicht Mn von 500 bis 50000, bevorzugt 550 bis 40000, besonders bevorzugt 650 bis 30000, ganz besonders bevorzugt 750 bis 20000 und insbesondere 900 bis 15000.

In einer bevorzugten Ausführungsform handelt es sich bei dem Polyisobuten um solches mit einem Mn von 950 bis 1050. Unter diesen Polyisobutenen sind solche mit einem hohen Gehalt an terminal angeordneten ethylenischen Doppelbindungen ($\alpha$-Doppelbindungen) bevorzugt, besonders solche mit einem Gehalt an $\alpha$-Doppelbindungen von wenigstens 50 Mol-%, bevorzugt wenigstens 60 Mol-%, besonders bevorzugt wenigstens 70 Mol-% und ganz besonders bevorzugt wenigstens 80 Mol-%. Diese werden als hochreaktive Polyisobutene bezeichnet.

In einer weiteren bevorzugten Ausführungsform handelt es sich bei dem Polyisobuten um solches mit einem Mn von 2300 bis 10000.

Für die Herstellung solcher iso-Buten in einpolymerisierter Form enthaltender Homo- oder Copolymere eignen sich als Isobuten-Quelle sowohl Rein-Isobuten als auch Isobuten-haltige C4-Kohlenwasserstoffströme, beispielsweise C4-Raffinate, insbesondere "Raffinat 1", C4-Schnitte aus der Isobutan-Dehydrierung, C4-Schnitte aus Steamcrackern und aus FCC-Crackern (fluid catalysed cracking), sofern sie weitgehend von darin enthaltenem 1,3-Butadien befreit sind. Ein C4-Kohlenwasserstoffstrom aus einer FCC-Raffinerieeinheit ist auch als "b/b"-Strom bekannt. Weitere geeignete Isobuten-haltige C4-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C4-Kohlenwasserstoffströme enthalten in der Regel weniger als 500

ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C4-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisierteiner bevorzugten Ausführungsform setzt man als Monomerquelle für die Polymerisation einen technischen C4-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das Isobuten bzw. der Isobuten-haltige C4-Kohlenwasserstoffstrom kann zumindest teilweise, bevorzugt vollständig aus nachwachsenden Quellen stammen, wie es beispielsweise in WO 2012/40859 A1 beschrieben wird, dort besonders von Seite 5, Zeile 9 bis Seite 6, Zeile 24. Der Anteil an Isobuten aus nachwachsenden Quellen an dem gesamten eingesetzten Isobuten, gemessen gemäß ASTM D 6866, wie beschrieben in WO 2012/40859 A1, beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Isobuten aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

Das aus nachwachsenden Rohstoffen erhaltene Isobuten kann dadurch charakterisiert werden, dass das $^{14}C/^{12}C$-Isotopenverhältnis bestimmt wird, bevorzugt gemäß der ASTM D 6866 ("Determining the Biobased Content of Natural Range Materials Using Radiocarbon and Isotope Ratio Mass Spectrometry Analysis").

Gemäß dieser Testmethode wird das $^{14}C/^{12}C$-Isotopenverhältnis einer Probe gemessen und verglichen mit dem $^{14}C/^{12}C$-Isotopenverhältnis in einem standardisierten 100% biobasierten Material. Als Ergebnis wird der Gehalt an biobasiertem Anteil in dem Muster erhalten.

Die Anwendung von ASTM-D6866 zur Ableitung des "biobasierten Gehalts" basiert auf den gleichen Konzepten wie eine Radiokohlenstoffdatierung, aber ohne Verwendung der Altersgleichungen. Die Analyse wird durchgeführt, indem ein Verhältnis der Menge an Radiokohlenstoff ($^{14}C$) in einer unbekannten Probe bestimmt wird im Vergleich zu der eines modernen Referenzstandards. Diese Kennzahl wird in Prozent angegeben mit der Einheit "pMC" (percent modern carbon, Prozent moderner Kohlenstoff). Wenn es sich bei dem zu analysierenden Material um ein Gemisch aus heutigem Radiokohlenstoff handelt und fossilem Kohlenstoff (mit sehr geringem Radiokohlenstoffgehalt), so korreliert der erhaltene pMC-Wert direkt mit der Menge des in der Probe vorhandenen Biomassematerials.

"Biobasierte Materialien" sind organische Materialien, aus Kohlenstoff, der aus vor kurzem (auf einer menschlichen Zeitskala) aus der Atmosphäre mit Hilfe von Sonnenenergie (Photosynthese) fixiertem $CO_2$ stammt. An Land wird dieses $CO_2$ aufgenommen oder fixiert durch Pflanzen (z. B. landwirtschaftliche Nutzpflanzen oder forstwirtschaftliche Pflanzungen). In den Ozeanen wird das $CO_2$ durch Photosynthese von und in Bakterien oder Phytoplankton gebunden oder fixiert. Somit hat ein biobasiertes Material ein Isotopenverhältnis von $^{14}C/^{12}C$ größer als 0. Demgegenüber besitzt ein fossiles Material ein $^{14}C/^{12}C$-Isotopenverhältnis von etwa 0.

Ein kleiner Teil der Kohlenstoffatome des Kohlendioxids in der Atmosphäre ist das radioaktive Isotop $^{14}C$, das entsteht, wenn atmosphärischer Stickstoff von einem durch kosmische Strahlung erzeugten Neutron getroffen wird, wodurch dem Stickstoff ein Proton verloren geht und sich Kohlenstoff der Atommasse 14 ($^{14}C$) bildet, der dann sofort zu Kohlendioxid oxidiert wird. Ein kleiner, aber messbarer Anteil des atmosphärischen Kohlenstoffs liegt in Form von $^{14}CO_2$ vor. Atmosphärisches Kohlendioxid wird von grünen Pflanzen assimiliert, um während des als Photosynthese bekannten Prozesses organische Moleküle herzustellen. Praktisch alle Lebensformen auf der Erde sind auf die Produktion organischer Moleküle durch grüne Pflanzen angewiesen, um die chemische Energie zu erzeugen, die Wachstum und Fortpflanzung ermöglichen. Daher wird das $^{14}C$, das sich in der Atmosphäre bildet, schließlich Teil aller Lebensformen und ihrer biologischen Produkte, die Biomasse anreichern und Organismen, die sich von Biomasse mit $^{14}C$ ernähren. Im Gegensatz dazu weist Kohlenstoff aus fossilen Quellen, besonders Erdöl oder Kohle, nicht das charakteristische $^{14}C:^{12}C$-Verhältnis von erneuerbaren organischen Molekülen auf, die aus atmosphärischem Kohlendioxid gewonnen werden.

In einer bevorzugten Ausführungsform der vorliegenden Erfindung weist das in dem Polyisobuten eingesetzte Isobuten einen biobasierten Anteil, gemessen als $^{14}C:^{12}C$-Verhältnis ASTM-D6866 von mehr als 0%, bevorzugt mindestens 1%, besonders bevorzugt mindestens 5%, ganz besonders bevorzugt mindestens 10%, insbesondere mindestens 20% und speziell mindestens 25% auf.

Mit Vorteil kann dieser biobasierte Anteil mindestens 30%, bevorzugt mindestens 40, besonders bevorzugt

mindestens 50, ganz besonders bevorzugt mindestens 66, insbesondere mindestens 75 und speziell mindestens 85% betragen.

Bei einem Anteil von mindestens 90%, bevorzugt mindestens 95%, besonders bevorzugt mindestens 98% und sogar 100% kann dies als deutlich überwiegend oder vollständig biobasiertes Isobuten bezeichnet werden.

Gemäß dieser Ausführungsform werden die Ressourcen geschont und das Produkt zumindest teilweise mit nachwachsenden Rohstoffen hergestellt.

In einer anderen Ausführungsform der vorliegenden Erfindung kann das in die Polymerisation eingesetzte Isobuten vollständig aus nachwachsenden Rohstoffen erhalten werden oder aus Abmischungen von Isobuten aus nachwachsenden und aus fossilen Quellen bestehen.

Diese Ausführungsform ist besonders dort und solange bevorzugt, wie Isobuten aus nachwachsenden Quellen nicht in industriell ausreichenden Mengen und ökonomisch verfügbar ist.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können, wenn auch weniger bevorzugt, auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

In einer bevorzugten Ausführungsform handelt es sich bei den erfindungsgemäß einsetzbaren Aminderivaten um Polyisobutenderivate, enthaltend mindestens eine Aminogruppe ($-NR^2R^3$).

Hierin bedeuten

$R^2$ und $R^3$ jeweils unabhängig voneinander Wasserstoff oder $C_1$-$C_4$-Alkyl oder können, wenn auch weniger bevorzugt, gemeinsam mit dem zentralen Stickstoffatom einen fünf- bis siebengliedrigen Ring ausbilden, der optional ein weiteres Heteroatom enthalten kann.

Bevorzugt sind $R^2$ und $R^3$ unabhängig voneinander Wasserstoff, Methyl, Ethyl, n-Propyl oder n-Butyl oder gemeinsam zusammen 1,4-Butylen, 1,5-Pentylen oder 3-Oxa-1,5-Pentylen, besonders bevorzugt Wasserstoff oder Methyl und ganz besonders bevorzugt Wasserstoff.

In einer bevorzugten Ausführungsform handelt es sich dabei um sogenannte Polyisobutenamine (PIBA), welche aus dem hochreaktivem Polyisobuten durch Hydroformylierung und reduktive Aminierung mit Ammoniak, Monoaminen oder Polyaminen wie Dimethyl-aminopropylamin, Ethylendiamin, Diethylentriamin, Triethylentetramin oder Tetraethylenpentamin hergestellt werden können, wie es insbesondere aus der EP-A 244 616 bekannt ist. Bevorzugt erfolgt die Umsetzung dabei mit Ammoniak. Somit enthält der Rest $R^1$ ein Kohlenstoffatom mehr als das zugrundeliegende Polyisobuten, das durch die Hydroformylierung eingefügt wurde.

Herstellungsbedingt handelt es sich bei Polyisobuten um ein Gemisch von Doppelbindungsisomeren, die die Eigenschaften und besonders die chemische Reaktivität des Polyisobuten bestimmen. Die wichtigsten sind

Isomere mit alpha-Doppelbindungen

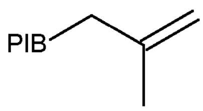

,

sowie

Isomere mit beta-Doppelbindungen

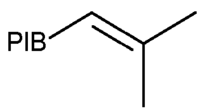

,

worin

der Rest PIB für den Rest des Polyisobuten ohne die gezeigte Substruktur steht.

Des weiteren sind noch weitere Isomere denkbar, wie sie beispielsweise in WO 2023/152258 gezeigt sind, die erfindungsgemäß jedoch lediglich eine untergeordnete Rolle spielen.

In einer bevorzugten erfindungsgemäßen Ausführungsform weist das für die Hydroformylierung eingesetzt Polyisobuten einen Gehalt an alpha-Doppelbindungen von mindestens 70% auf, bevorzugt mindestens 75, besonders bevorzugt mindestens 80, ganz besonders bevorzugt mindestens 85 und insbesondere mindestens 90% auf. Ein derartiges Polyisobuten wird auch als hochreaktives Polyisobuten bezeichnet.

Der Gehalt an beta-Doppelbindungen kann bis zu 25%, bevorzugt bis zu 20, besonders bevorzugt bis zu 15, ganz besonders bevorzugt bis zu 10 und insbesondere bis zu 5% betragen.

Der Gehalt an anderen Isomeren als solchen mit alpha- oder beta-Doppelbindungen beträgt meist nicht mehr als 5%.

Der Gehalt an Isomeren wird mit Hilfe der $^1$H-NMR Spektroskopie bestimmt, wobei die Empfindlichkeit durch die Frequenz des Messgerätes festgelegt wird. Bevorzugt wird die $^1$H-NMR Spektroskopie mit 700 MHz bei 25 °C ausgeführt. Besonders bevorzugt werden die Isomere identifiziert nach der Methode wie beschrieben in Guo et al., Journal or Polymer Science, Part A: Polymer Chemistry, 2013, 51, 4200-4212.

In einer bevorzugten Ausführungsform weist das Polyisobuten ein zahlenmittleres Molekulargewicht Mn von 104 bis zu 10000 g/mol mit den oben angebenen Gehalten an alpha- und beta-Doppelbindungen auf, bevorzugt von 156 bis 5000, besonders bevorzugt von 500 bis 2500.

In einer weiteren weniger bevorzugten Ausführungsform weist das Polyisobuten (A) ein zahlenmittleres Molekulargewicht Mn von mehr als 10000 bis zu 100000 g/mol auf, bevorzugt von 11000 bis 90000, besonders bevorzugt von 12000 bis 80000, ganz besonders bevorzugt von 13000 bis 75000 und insbesondere von 14000 bis 70000 und einen Gehalt an alpha-Doppelbindungen von mindestens 20 bis 60% auf, bevorzugt mindestens 25 bis 45, besonders bevorzugt mindestens 30 bis 40% auf. Ein derartiges Polyisobuten wird auch als mittelmolekulares Polyisobuten bezeichnet.

Denkbar, wenn auch weniger bevorzugt, ist der Einsatz von hochmolekularem Polyisobuten mit einem zahlenmittleren Molekulargewicht von mehr als 100000 bis zu 5000000 g/mol, das in der Regel einen Gehalt an alpha-Doppelbindungen von nicht mehr als 50%, bevorzugt nicht mehr als 40% und besonders bevorzugt nicht mehr als 30% aufweist.

Das Molekulargewicht wird bestimmt durch Gelpermeationschromatographie mit Polystyrol als Standard.

Die idealisierte Struktur eines Polyisobutenamins ist

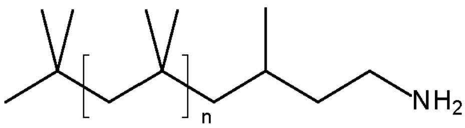

Darin ist die Laufzahl n wie oben definiert.

Für ein zahlenmittleres Molekulargewicht Mn des bevorzugt zugrunde liegenden Polyisobutens von 168 bis 2300 ist n von 1 bis 39, für ein Mn von 224 bis 1500 ist n von 2 bis 25, für ein Mn von 550 bis 1300 ist n von 8 bis 21, für ein Mn von 700 bis 1300 ist n von 10 bis 21 und für ein Mn von 950 bis 1050 ist n von 15 bis 17.

Wird das zugrunde liegende Polyisobuten aus isobutenhaltigen C4-Kohlenwasserstoffströmen (s.o.) hergestellt, die andere Monomere als Isobuten enthalten, so umfasst das polymere Grundgerüst andere Monomere in polymerisierter Form, z. B. 1-Buten und cis- und trans-2-Buten, insbesondere 1-Buten.

Ein solches Polyisobutenamin ist erhältlich durch Polymerisierung von Isobuten zu einem Polyisobuten mit (idealisiert) endständiger Doppelbindung, das in einem Folgeschritt einer Hydroformylierung und anschließender Aminierung mit Ammoniak unterzogen wird. Dieses Verfahren ist beispielhaft im Example 1 der US 4832702 beschrieben. Der Parameter n entspricht dabei dem Polymerisationsgrad minus 2 des Isobuten im Polyisobuten, das eingesetzte Polyisobuten weist bevorzugt ein Molekulargewicht von ca. 1000 g/mol auf.

In einer weiteren bevorzugten Ausführungsform handelt es sich dabei um freie Amino- und Imidogruppen enthaltende Verbindungen, wie vorzugsweise Umsetzungsprodukte von Alkyl- oder Alkenyl-substituiertem Bernsteinsäureanhydrid mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.

Derartige Polyisobutenylsuccinimide weisen die Formel

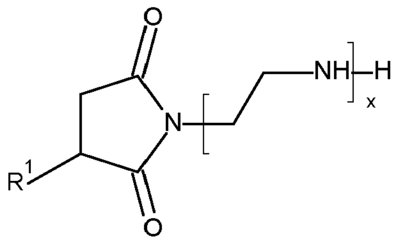

auf, worin

$R^1$ für einen Polyisobutenylrest mit einem zahlenmittleren Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol, und

x für eine positive ganze Zahl von beispielsweise 1 bis 4, bevorzugt 2 bis 4, besonders bevorzugt 3 oder 4 steht.

Bevorzugt weist der Rest $R^1$ ein Molekulargewicht von 550 bis 2300, bevorzugt von 650 bis 1500 und besonders bevorzugt von 750 bis 1300 g/mol auf.

In einer weiteren bevorzugten Ausführungsform werden als erfindungsgemäß einsetzbare Aminderivate die Umsetzungsprodukte von Alkyl- oder Alkenyl-substituiertem Bernsteinsäureanhydrid mit N-einfach- oder doppelt-substituierten 1,ω-Alkylendiaminen, bevorzugt 1,3-Propylendiaminen eingesetzt.

Beispiele dafür sind N-Cyclohexylpropylendiamin-1,3; N-2-Ethylhexylpropylendiamin-1,3; N-Dodecyl-1,3-Propylendiamin; N-Stearylpropylendiamin-1,3; N-Oleylpropylendiamin-1,3; N-3-Aminopropyltalgfettamin; N-Arachidylpropylendiamin-1,3; N-Behenylpropylendiamin-1,3; N-Benzyl-propylendiamin-1,3; N-Phenylpropylendiamin-1,3; 2-Aminoethylstearylamin; 2-Aminoethylbehenylamin; 2-Aminoethyloleylamin; 2-Aminoethyltalgfettamin; N-Stearylbishexamethylendiamin-1,6; N-Stearyldipropylentriamin; N-Dodecyldipropylentriamin; N,N-Dimethylaminopropylamin-1,3; N,N-Ditridecylpropylendiamin-1,3; N,N-Bis(2-Ethylhexyl)-3-Aminopropylenamin; Bis-aminopropyltalgfettamin; Bis-aminopropyllaurylamin, 1-(2-Aminopropyl)-stearylamin; 1-(2-Aminopropyl)-piperazin; N-2-Aminoethyl-piperidin; N-3-Aminopropylimidazol.

Bevorzugt ist N,N-Dimethylaminopropylamin-1,3.

In der Regel bilden sich bei der Öffnung der Anhydridfunktionalitäten zunächst die jeweiligen Amide oder bei höherer Reaktionstemperatur erfolgt der Ringschluß zu den jeweiligen Imiden.

Die Herstellung ist beispielsweise beschrieben in WO 2012/004300. Wird die Temperatur in der Umsetzung des Alkyl- oder Alkenyl-substituiertem Bernsteinsäureanhydrid mit dem N-einfach- oder doppelt-substituierten 1,ω-Alkylendiaminen auf weniger als etwa 80 °C gehalten, so bildet sich überweigend ein Amid, wobei untergeordnete Mengen an Imid auch unter diesen Reaktionsbedingungen gebildet werden.

Die erfindungsgemäß einsetzbaren Verbindungen, die einen von Bernsteinsäure abgeleiteten Spacer X enthalten, basieren in der Regel auf Polyisobutenyl-substituierten Bernsteinsäureanhydriden (PIBSA), die durch En-Reaktion von hochreaktiven Polyisobutenen mit Maleinsäureanhydrid erhältlich sind und als Ausgangsverbindungen für die Amide oder Imide dienen.

In einer bevorzugten Ausführungsform werden für diese Polyisobutenyl-substituierten Bernsteinsäureanhydride hochreaktive Polyisobutene mit dem oben angegebenen zahlenmittleren Molekulargewicht Mn eingesetzt.

In einer bevorzugten Ausführungsform weisen die einzusetzenden Polyisobutenyl-substituierten Bernsteinsäureanhydride (PIBSA) auch mehr als einfach substituierte Produkte auf.

Das Verhältnis der höher zu den einfach maleinierten Komponenten zueinander kann durch den "Bismaleinierungsgrad" (BMG) angegeben werden. Der BMG ist an sich bekannt (Siehe auch US 5,883,196) und kann nach folgender Formel bestimmt werden:

$$BMG = 100\% \times [(wt\text{-}\%(BM\ PIBSA)/(wt\text{-}\%(BM\ PIBSA)+wt\text{-}\%(PIBSA))]$$

wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Berechnet wird der Bismaleinierungsgrad bevorzugt aus der Verseifungszahl gemäß DIN 53401: 1988-06 der Probe. Dabei muß die Probe gegebenenfalls mit einem geeigneten Lösungsmittel solubilisiert werden, bevorzugt in einem 2:1 Gemisch aus Toluol und Ethanol.

Dabei ist zu beachten, daß lediglich das Verhältnis der höher maleinierten Komponenten zu den einfach maleinierten Komponenten einbezogen wird, wohingegen im Reaktionsgemisch befindliches unumgesetztes Polyisobuten, beispielsweise solches, das keine reaktiven Doppelbindungen enthält, nicht in die Bestimmung des Bismaleinierungsgrades eingeht. Mithin kann das Reaktionsgemisch auch noch unumgesetztes Polyisobuten enthalten, was meist dem Anteil im eingesetzten Polyisobuten entspricht, der keine reaktiven Doppelbindungen enthält, wohingegen der reaktive Doppelbindungen enthaltende Anteil im Polyisobuten bevorzugt vollständig oder nahezu vollständig abreagiert.
In einer bevorzugten Ausführungsform weisen die PIBSA einen Bismaleinierungsgrad von mindestens 5%, bevorzugt mindestens 8%, besonders bevorzugt mindestens 10% auf.
Mit weiterem Vorteil können solche Umsetzungsprodukte von Polyisobuten mit einem Bismaleinierungsgrad von mindestens 12%, bevorzugt mindestens 15%, besonders bevorzugt mindestens 20% eingesetzt werden.
Der Bismaleinierungsgrad kann bis zu 60% betragen, bevorzugt bis zu 55%, besonders bevorzugt bis zu 50%, insbesondere bis zu 45% und speziell bis zu 40%. Bei Wahl geeigneter Reaktionsbedingungen, besonders einem hohen Überschuß an Maleinsäureanhydrid, kann der Bismaleinierungsgrad bis auf bis zu 80% und sogar bis zu 100% gesteigert werden.
Die besten Ergebnisse werden erzielt bei einem Bismaleinierungsgrad von 10 bis 50%, bevorzugt 12 bis 45% und besonders bevorzugt 15 bis 40%.
Die erfindungsgemäßen Aminderivate werden der Kautschukmischung in der Regel in Mengen von 2 bis 20, bevorzugt 4 bis 14, besonders bevorzugt 5 bis 10 phr zugegeben.
In der Regel werden diese Verbindungen der Kautschukmasse zusammen mit den anderen Bestandteilen zugegeben und in einem Kneter oder Extruder zur Einleitung der Vulkanisation erhitzt. Es kann auch vorteilhaft sein, zunächst die Kautschukmasse und die Füllmaterialien zusammen mit den Aminderivate innig zu vermischen und später dann die anderen Bestandteilen, besonders Antioxidans, Aktivator und/oder Plastifizierer hinzuzugeben.
Demzufolge ist eine weitere Ausführungsform der vorliegenden Erfindung ein Verfahren zur Absenkung der Viskosität von Kautschukmassen in der Herstellung von Kautschuke-enthaltenden Reifen, in dem man

- mindestens einen Kautschuk mit
- Ruß und/oder Silikaten und
- mindestens einem Prozesshilfsmittel und/oder Additiv zur Verbesserung mindestens einer Gebrauchseigenschaft des Reifens

in einem Kneter und/oder Extruder vermischt,
wobei man der Kautschukmasse vor und/oder während der Verarbeitung mindestens ein Aminderivat wie oben beschrieben zusetzt.

Die Verfahren zur Vulkanisierung und Herstellung von Kautschukmassen sind an sich bekannt und sind auf den Einsatz der Aminderivate übertragbar.
Es stellt einen Vorteil der Aminderivate dar, dass sie eine vorteilhafte Wirkung auf die Verbesserung mindestens einer der folgenden Eigenschaften

- Dispersionskoeffizient
- Teilchengröße
- Nasshaftung
- Abriebsfestigkeit
- Rollwiderstand

von Kautschuke-enthaltenden Reifen haben.
Die Aminderivate sind besonders geeignet zur Verbesserung der Dispergierung der Füllstoffe, besonders von Silika in den Kautschukmassen.
Ferner zeigen sie einen besonderen Vorteil zur Verringerung des Rollwiderstandes.
Während der Herstellung der Kautschukmassen zeigt die Verwendung der Aminderivate weiterhin den Vorteil, dass sie die Viskosität der Kautschukmassen während der Verarbeitung und Herstellung von Kautschuke-enthaltenden Reifen deutlich absenken.
Demgemäß ist ein weiterer Gegenstand der vorliegenden Erfindung ein Verfahren zur Absenkung der Viskosität von Kautschukmassen in der Herstellung von Kautschuke-enthaltenden Reifen, in dem man

- mindestens einen Kautschuk mit
- Ruß und/oder Silikaten und
- mindestens einem Prozesshilfsmittel und/oder Additiv zur Verbesserung mindestens einer Gebrauchseigenschaft

des Reifens

in einem Kneter und/oder Extruder vermischt,
in dem man der Kautschukmasse vor und/oder während der Verarbeitung mindestens ein Aminderivat wie beschrieben zusetzt.

Ferner zeigen diese Verbindungen einen Vorteil hinsichtlich Nassgriff bei niedrigen Temperaturen (-10 °C) und/oder Rollwiderstand und/oder Abriebsbeständigkeit der diese enthaltenden Reifen. Bevorzugt verbessern die Aminderivate mindestens zwei dieser drei Eigenschaften. Es stellt einen besonderen Vorteil dar, dass die Aminderivate gleichzeitig einen Vorteil hinsichtlich Nassgriff bei niedrigen Temperaturen (-10 °C) und Rollwiderstand und Abriebsbeständigkeit der Reifen aufweisen.

Durch die Erhöhung der Abriebsfestigkeit der Reifen wird die Freisetzung von Mikroplastik aus dem Abrieb von Reifen beim Betrieb von Kraftfahrzeugen verringert.

Ein weiterer Gegenstand sind Kautschukmassen, enthaltend

- mindestens einen Kautschuk, ausgewählt aus der Gruppe bestehend aus Isobuten-Isopren-Kautschuk, Styrol-Butadien-Kautschuk und Naturkautschuk,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), Bis(3-trimethoxysilylpropyl) polysulfid, Bis(3-triethoxysilylpropyl)polysulfid, Bis(3-triethoxysilylpropyl)tetrasulfid (TESPT) der Formel $[(C_2H_5O)_3Si(CH_2)_3S_2]_2$, und Bis(triethoxysilylpropyl)disulfid (TESPD) der Formel $[(C_2H_5O)_3Si(CH_2)_3S]_2$, und mindestens ein Aminderivat der Formel

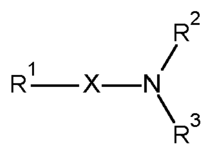

.

Ein weiterer Gegenstand der vorliegenden Erfindung sind für solche Fälle, in denen mindestens einer der beiden Reste $R^2$ und $R^3$ Wasserstoff ist, bevorzugt wenn beide Wasserstoff sind, Verbindungen der Formel

$$R^1\text{-X-NR}^3\text{-Si}(OC_2H_5)_2\text{-}(CH_2)_3\text{-}S_4\text{-}(CH_2)_3\text{-Si}(OC_2H_5)_3$$

und

$$R^1\text{-X-NR}^3\text{-Si}(OC_2H_5)_2\text{-}(CH_2)_3\text{-}S_2\text{-}(CH_2)_3\text{-Si}(OC_2H_5)_3,$$

in denen $R^1$, X und $R^3$ die obigen Bedeutungen aufweisen,
sowie Kautschukmassen, enthaltend mindestens eine dieser Verbindungen, deren Verwendung in Kautschuke-enthaltenden Reifen, besonders zur Verbesserung der Kompatibilität von Silikaten in Kautschuke-enthaltenden Reifen und deren Verwendung zur Verbesserung mindestens einer der folgenden Eigenschaften

- Dispersionskoeffizient
- Teilchengröße
- Nasshaftung
- Abriebsfestigkeit
- Rollwiderstand
- Vulkanisierungsgeschwindigkeit

von Kautschuke-enthaltenden Reifen.

Ein weiterer Gegenstand der vorliegenden Erfindung sind Derivate des Polyisobutenamin mit dem Silan-Kopplungsmittel mit der idealisierten Struktur wie folgt:

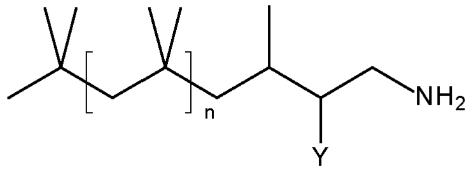

worin

die Laufzahl n wie oben definiert ist und

Y für $-(S)_y-R^{25}-Si(OR^{26})_3$ und

y für 1, 2, 3 oder 4

stehen und

$R^{25}$ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere 1,3-Propylen ist, und

$R^{26}$ für $C_1$- bis $C_6$-Alkyl, bevorzugt $C_1$- bis $C_4$-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl ist.

Diese Verbindungen, sowie Kautschukmassen, enthaltend mindestens eine dieser Verbindungen, deren Verwendung in Kautschuke-enthaltenden Reifen, besonders zur Verbesserung der Kompatibilität von Silikaten oder als Kopplungsmittel in Kautschuke-enthaltenden Reifen und deren Verwendung zur Verbesserung mindestens einer der folgenden Eigenschaften

- Dispersionskoeffizient
- Teilchengröße
- Nasshaftung
- Abriebsfestigkeit
- Rollwiderstand
- Vulkanisierungsgeschwindigkeit

von Kautschuke-enthaltenden Reifen
sind ebenfalls Gegenstand der vorliegenden Erfindung.

Ein weiterer Gegenstand der vorliegenden Erfindung für solche Fälle, in denen mindestens einer der beiden Reste $R^2$ und $R^3$ Wasserstoff ist, bevorzugt wenn beide Wasserstoff sind, sind Derivate der Aminverbindungen mit den als Aktivatoren eingesetzten Fettsäuren, besonders Stearinsäure, mit der Struktur wie folgt:

$$R^1\text{-X-NR}^3\text{-(C=O)-R}^{10}$$

in denen $R^1$, X und $R^3$ die obigen Bedeutungen aufweisen und
$R^{10}$ den Rest einer Fettsäure, bevorzugt einen gesättigten Alkylrest oder ein- oder mehrfach ungesättigen Alkenylrest mit 9 bis 19 Kohlenstoffatomen bedeuten.

Bevorzugt ist der Rest $R^{10}$-(C=O)- abgeleitet von Fettsäuren wie Laurinsäure, Myristinsäure, Stearinsäure, Palmitinsäure, Laurinsäure, Ölsäure, Linolsäure und Linolensäure oder deren Gemischen.
Technisch übliche Fettsäuregemische sind bevorzugt Talgfettsäure, Kokosölfettsäure, Tranfettsäure, Kokospalmkernölfettsäure, Sojaölfettsäure, Rübölfettsäure, Erdnussölfettsäure oder Palmölfettsäure, welche als Hauptkomponenten Ölsäure und Palmitinsäure enthalten.

Diese Verbindungen, sowie Kautschukmassen, enthaltend mindestens eine dieser Verbindungen, deren Verwendung in Kautschuke-enthaltenden Reifen, besonders Vulkanisierungsaktivatoren oder -beschleuniger in Kautschuke-enthaltenden Reifen und deren Verwendung zur Verbesserung mindestens einer der folgenden Eigenschaften

- Dispersionskoeffizient
- Teilchengröße
- Nasshaftung
- Abriebsfestigkeit
- Rollwiderstand
- Vulkanisierungsgeschwindigkeit

von Kautschuke-enthaltenden Reifen
sind ebenfalls Gegenstand der vorliegenden Erfindung.

Des weiteren sind die erfindungsgemäßen Verbindungen geeignet, während der Herstellung von Kautschukmassen für Reifen freigesetzte Alkohole, besonders Ethanol zu binden, so dass während der Herstellung geringere Emissionen freigesetzt werden.

Ohne an eine Theorie gebunden sein zu wollen wird vermutet, dass solche während der Herstellung von Kautschukmassen für Reifen freigesetzten Alkohole $R^6OH$, besonders Ethanol, mit bis dahin unreagierten Bernsteinsäureanhydrid- oder Carbonsäuregruppen reagieren und als Carbonsäureester gebunden werden. Es ist auch denkbar, dass der freigesetzte Alkohol $R^6OH$, besonders Ethanol, Alkohole oder Amine in einer Umesterung bzw. in einer Umamidierung aus der bestehenden Carbonsäureester-, -amid- bzw. -imidbindung verdrängt.

Dabei können beispielsweise folgende Verbindungen gebildet werden:

Aus den Verbindungen

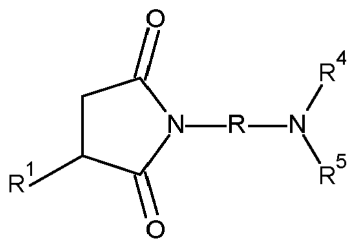

oder

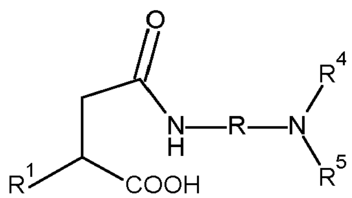

oder

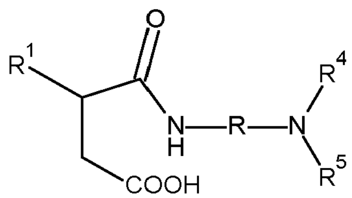

können gebildet werden

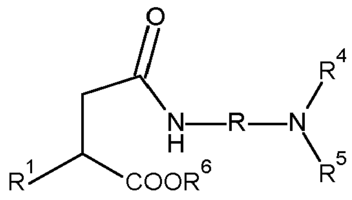

oder

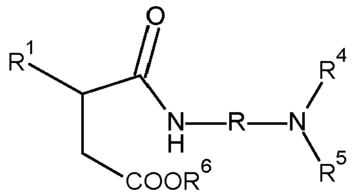

oder

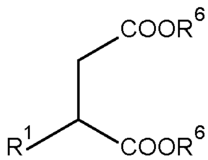
.

Aus der Verbindung

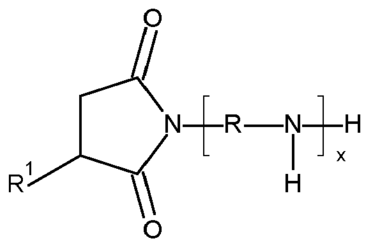

kann gebildet werden

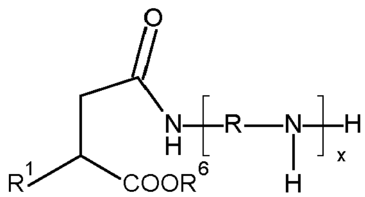

oder

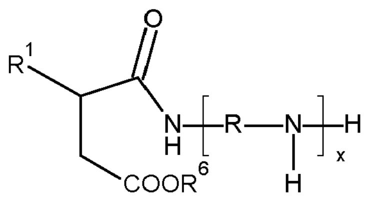

oder

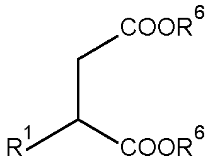

,

worin die Variablen jeweils ihre obige Bedeutung aufweisen.

Im Fall von Aminderivaten der Formel

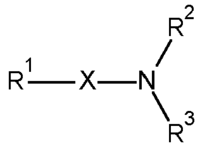

worin
$R^2$ und $R^3$ jeweils Wasserstoff ist, kann einer der Reste $R^2$ und $R^3$ oder beide durch $R^6$, bevorzugt durch Ethyl ersetzt sein.

Diese Verbindungen, die aus der Reaktion mit freigesetztem Alkohol entstehen, sowie Kautschukmassen, enthaltend mindestens eine dieser Verbindungen, deren Verwendung in Kautschuke-enthaltenden Reifen, besonders zur Verbesserung der Kompatibilität von Silikaten oder als Kopplungsmittel in Kautschuke-enthaltenden Reifen und deren Verwendung zur Verbesserung mindestens einer der folgenden Eigenschaften

- Dispersionskoeffizient
- Teilchengröße
- Nasshaftung
- Abriebsfestigkeit
- Rollwiderstand
- Vulkanisierungsgeschwindigkeit

von Kautschuke-enthaltenden Reifen

sind ebenfalls Gegenstand der vorliegenden Erfindung.

Die vorliegende Erfindung wird durch die nachstehenden Beispiele illustriert, ohne darauf beschränkt zu sein.

Beispiele

Herstellungsbeispiele

Verbindung 1

Polyisobutenamin mit einem zahlenmittleren Molgewicht Mn von ca. 1000 g/mol, kommerziell erhältlich als Kerocom PIBA 03 von BASF SE, Ludwigshafen, gelöst in Mihagol.

Verbindung 2

150,20 g Glissopal® 1000 der BASF SE, Ludwigshafen, zahlenmittleres Molegulargewicht Mn (bestimmt per GPC) ca. 1000 g/mol, Polydispersität ca. 1,6, Gehalt an alpha-Doppelbindungen (bestimmt per $^{13}C$ NMR) ca. 88%, beta-Doppelbindungen 6%, wurden mit 29,4 g (0,30 mol, 2 Äq.) Maleinsäureanhydrid in einem Autoklav auf 225 °C erwärmt und für 7 h gerührt. Anschließend wurde die Reaktionsmischung auf 80 °C abgekühlt und mit 150 ml Heptan versetzt. Die Lösung wurde für 1 h bei 100 °C gerührt und anschließend filtriert. Das Lösungsmittel wurde im Vakuum entfernt (Ausbeute = 164,00 g). (SV: 175 mg KOH/g). Man erhielt ein Polyisobutenylbernsteinsäureanhydrid (PIBSA) mit einem Bismaleinierungsgrad von ca. 100%.

Verbindung 3

122,2 g eines analog zu Verbindung 2 erhaltenes Polyisobutenylbernsteinsäureanhydrid mit einem SV von 91,8 mg KOH/g wurden in 100,60 g Toluol gelöst. Die Reaktionsmischung wurde mit 11,20 g (0,11 mol) 3-Dimethylaminopropylamin versetzt und für 2 h bei 120 °C gerührt. Anschließend wurde die Reaktionsmischung auf Raumtemperatur abgekühlt und das Lösungsmittel wurde im Vakuum entfernt (Ausbeute = 130,50 g).

Verbindung 4

126,10 g eines analog zu Verbindung 2 erhaltenes Polyisobutenylbernsteinsäureanhydrid mit einem SV von 89,0 mg KOH/g wurden in 100,00 g Toluol gelöst. Die Reaktionsmischung wurde mit 18,90 g (0,10 mol) Tetraethylenpentamin versetzt und für 2 h bei 120 °C gerührt. Anschließend wurde die Reaktionsmischung auf Raumtemperatur abgekühlt und das Lösungsmittel wurde im Vakuum entfernt (Ausbeute = 142,10 g).

Methodenbeschreibung

Verbesserung des Dispersionskoeffizients

Die Makrodispersion (Dispersions Index Analyse System, DIAS) der unverteilten Füllstoffagglomerate (Partikel) wird bestimmt, indem mittels eines Lichtmikroskops bei 125facher Vergrößerung von mindestens 10 Bildern rechnergestützt die Reflexion der Flächen der Partikel mit der gesamten Beobachtungsfläche verglichen wird. Daraus ergibt sich der Dispersionsgrad (Angabe in Prozent %), wobei über Korrekturfaktoren der Füllstoffvolumengehalt und das Leervolumen der Füllstoffe berücksichtigt wird. Angestrebt wird ein hoher Dispersionskoeffizient.

Bestimmung der Partikelgröße

Der mittlere Durchmesser der Partikel wurde optisch zusammen mit der Berechnung des Dispersionskoeffizients bestimmt.
Eine geringe Partikelgröße ist vorteilhaft.

Nassgriff bei niedrigen Temperaturen (-10 °C) und Rollwiderstand

Von der hergestellten Kautschukmasse wird ein Streifenprüfkörper (40 × 10 × 2 mm) in einem ARES-Prüfgerät der Firma Rheometric Scientific™ einer dynamisch-mechanischen Analyse (DMA) unterzogen.
Messparameter:

Temperaturbereich -60 bis 80 °C
Frequenz 1 Hz
Amplitude 0,5 %

Der tan(δ)-Wert bei -10 °C wird als Maß für die Traktion auf nasser Fahrbahn bei niedriger Temperatur angesehen, der tan(δ)-Wert bei +60 °C als Maß für den Rollwiderstand. Hohe Werte für $\tan(\delta)_{-10°C}$ bedeuten einen hohen Nassgriff und sind vorteilhaft, niedrige Werte für $\tan(\delta)_{60°C}$ bedeuten einen geringen Rollwiderstand und sind anzustreben.

Abriebsbeständigkeit

Der Abrieb wurde nach DIN ISO 4649 in einer Abriebsapparatur der Fa. Frank bei einer Last von 10 N über eine Gleitlänge von 40 m und einer Rotation von 40 $m^{-1}$ bestimmt. Der Abriebsindex wird in Prozent [%] angegeben, höhere Werte sind positiv.

Absenkung der Viskosität während der Verarbeitung

Die Komponenten der Kautschukmassen wurden in den angegebenen Verhältnissen miteinander vermischt und die Mooney-Viskosität der Masse bei einer Temperatur von 100 °C bei 2 Umdrehungen/min in einem Mooney-Meter Alpha Technologies MV 2000 E (Mooney ML (1+4) 100 °C) bestimmt.
Gemessen wird die Viskosität in Mooney-Einheiten (ME).

Vulkanisierungsbeschleunigung

Eine Silica-haltige Kautschukmasse wie unten beschrieben wurde in bei 160 °C bei einer Amplitude von 0,5% und einer Frequenz von 1.67 Hz in einem Vulkameter Monsanto Rheometer MDR 2000E behandelt, wobei das Drehmoment über die Zeit verfolgt wurde. Der Anstieg des Drehmoments beschreibt den Fortschritt der Vulkanisation.
Des weiteren wurde die Kautschukmasse bei 160 °C bei einer Last von 280 bar in einer Apparatur von Rucks Maschinenbau KV 207.00 zur Bestimmung des $t_{90}$-Wertes vulkanisiert.
Eine Verkürzung der $t_{90}$-Zeit ist vorteilhaft.

Anwendungsbeispiele

Es wurden Silica-haltige ("Referenz") Kautschukmassen als Vergleich bzw. mit den erfindungsgemäßen Additiven hergestellt mit folgender Zusammensetzung:

| | | Menge [phr] |
|---|---|---|
| **Funktion** | **Bezeichnung** | **Referenz** |
| Kautschuk | SBR (high-Tg) NS616 1) | 100 |
| Silica | U7000 GR 2) | 80 |
| Silan | Si 69 3) | 8 |
| Weichmacher | Vivatec 500 | 37,5 |
| Aktivator | ZnO | 2,5 |
| Aktivator | Stearinsäure | 1 |
| Antioxidant | IPPD 4) | 2 |
| Beschleuniger | DPG 5) | 2 |
| Beschleuniger | CBS 6) | 1,7 |
| Vernetzer | Schwefel | 1,4 |

1) Kautschuk Nipol NS616 (modifiziertes S-SBR, Styrolgehalt: 20 Gew%, Vinylgruppengehalt: 67 mol%, SP Wert: 17,25 $(J/cm^3)^{1/2}$, Tg: -25°C, Mw: 510,000, non-oil-extended) hergestellt durch ZEON CORPORATION (SBR1 in EP 3263360 A1, Absatz [0054])
2) Amorphes $SiO_2$, Ultrasil 7000 GR von Evonik
3) Bis(triethoxysilylpropyl)tetrasulfid
4) IPPD: N-Isopropyl-N'-phenyl-1,4-phenylenediamin
5) DPG: N,N'-Diphenylguanidin
6) CBS: N-Cyclohexylbenzothiazol-2-sulfenamid

Erfindungsgemäße Kautschukmassen

Durch Zusatz der angegebenen Menge der erfindungsgemäßen Verbindungen wurden Silica-haltige Kautschukmassen K1 bis K5 analog der Silica-haltigen Referenzkautschukmasse "Referenz" hergestellt. Zum Ausgleich wurde teilweise der Anteil an Weichmacher entsprechend verringert.

| | | | Menge [phr] | |
|---|---|---|---|---|
| **Funktion** | **Bezeichnung** | **K1** | **K3** | **K4** |
| Kautschuk | SBR (high-Tg) NS616 | 100 | 100 | 100 |
| Silica | U7000 GR | 80 | 80 | 80 |
| Silan | Si 69 | 8 | 8 | 8 |
| | Verbindung 1 | 5 | | |
| | Verbindung 3 | | 5 | |
| | Verbindung 4 | | | 5 |

(fortgesetzt)

| | | | Menge [phr] | |
|---|---|---|---|---|
| **Funktion** | **Bezeichnung** | **K1** | **K3** | **K4** |
| Weichmacher | Vivatec 500 | 32,5 | 32,5 | 32,5 |
| Aktivator | ZnO | 2,5 | 2,5 | 2,5 |
| Aktivator | Stearinsäure | 1 | 1 | 1 |
| Antioxidant | IPPD | 2 | 2 | 2 |
| Beschleuniger | DPG | 2 | 2 | 2 |
| Beschleuniger | CBS | 1,7 | 1,7 | 1,7 |
| Vernetzer | Schwefel | 1,4 | 1,4 | 1,4 |

Beispiel 1 (Verbesserung des Dispersionskoeffizients)

| | Dispersionskoeffizient [%] |
|---|---|
| Referenz | 61 |
| K1 | 72 |
| K3 | 70 |
| K4 | 78 |

Beispiel 2 (Verringerung der Partikelgröße)

| | Partikelgröße |
|---|---|
| Referenz | 180 |
| K1 | 115 |
| K3 | 158 |
| K4 | 119 |

Beispiel 3 (Nassgriff bei niedrigen Temperaturen (-10 °C))

| | Nassgriff ($\tan(\delta)_{-10°C}$) |
|---|---|
| Referenz | 0,83 |
| K3 | 1,07 |
| K4 | 1,00 |

Beispiel 4 (Rollwiderstand)

| | Rollwiderstand $\tan(\delta)_{60°C}$ |
|---|---|
| Referenz | 0,14 |
| K1 | 0,056 |
| K3 | 0,037 |
| K4 | 0,04 |

Beispiel 5 (Abriebsbeständigkeit)

| | Abriebsbeständigkeit |
|---|---|
| Referenz | 129 |
| K3 | 134 |
| K4 | 146 |
| PIBA | 142 |

Beispiel 6 (Shore A-Härte)

Die Shore A-Härte wurde mit einem Zwick digitest-Gerät nach DIN ISO 48-4 bestimmt.

| | Dispersionskoeffizient [%] |
|---|---|
| Referenz | 64 |
| K1 | 67 |
| K3 | 64 |
| K4 | 65 |

Beispiel 7 (Beschleunigung der Vulkanisierung)

| | t90 [min] |
|---|---|
| Referenz | 18,60 |
| K1 | 19,16 |
| K3 | 17,86 |
| K4 | 18,37 |

## Patentansprüche

1. Verwendung von Aminderivaten der Formel

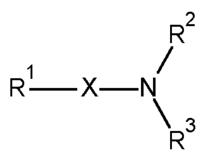

worin

X eine Einfachbindung oder ein organischer Spacer,
$R^1$ ein geradkettiger oder verzweigter Alkenylrest mit einem Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol
$R^2$ und $R^3$ unabhängig voneinander eine weitere Einfachbindung zum organischen Spacer X, Wasserstoff, $C_1$- bis $C_4$-Alkyl, eine Gruppe -R-$NR^4R^5$ oder ein sich wiederholender Rest $-[-R-NH-]_x-H$
x eine positive ganze Zahl von 1 bis 4
R ein zweibindiger organischer, 2 bis 6 Kohlenstoffatome aufweisender organischer Rest, bevorzugt ausgewählt aus der Gruppe bestehend aus 1,2-Ethylen, 1,2-Propylen und 1,3-Propylen,
$R^4$ und $R^5$ unabhängig Wasserstoff oder $C_1$- bis $C_4$-Alkyl
ist
zur Verbesserung mindestens einer der folgenden Eigenschaften

- Dispersionskoeffizient
- Teilchengröße
- Nasshaftung
- Abriebsfestigkeit
- Rollwiderstand
- Vulkanisierungsgeschwindigkeit

von Kautschuke-enthaltenden Reifen.

2. Verwendung gemäß Anspruch 1, **dadurch gekennzeichnet, daß** das Aminderivat ein Polyisobutenamin der Formel

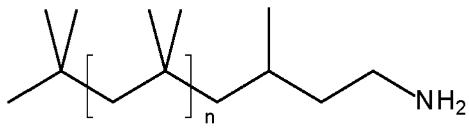

ist, worin n eine positive ganze Zahl von 0 bis 960 ist, bevorzugt von 0 bis 94, besonders bevorzugt von 1 bis 46 und ganz besonders bevorzugt von 3 bis 22.

3. Verwendung gemäß Anspruch 1, **dadurch gekennzeichnet, daß** das Aminderivat die Formel

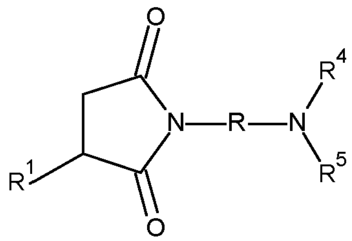

oder

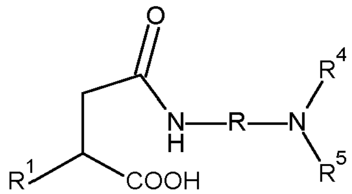

oder

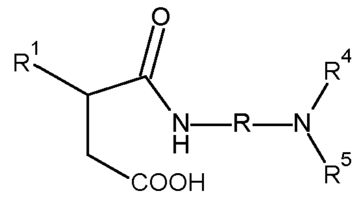

erfüllt, worin

R ein zweibindiger Alkylenrest, der gegebenenfalls von Sauerstoffatomen unterbrochen sein kann
$R^4$ und $R^5$ unabhängig voneinander Wasserstoff oder $C_1$- bis $C_4$-Alkyl

ist.

**4.** Verwendung gemäß Anspruch 3, **dadurch gekennzeichnet, daß**

- R 1,3-Propylen und
- $R^4$ und $R^5$ jeweils $C_1$- bis $C_4$-Alkyl

ist.

**5.** Verwendung gemäß Anspruch 1, **dadurch gekennzeichnet, daß** das Aminderivat die Formel

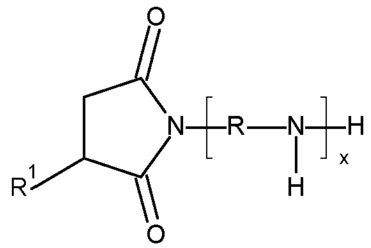

erfüllt, worin

R ein zweibindiger Alkylenrest, der optional von Sauerstoffatomen unterbrochen sein kann und
x eine positive ganze Zahl von 1 bis 4

ist.

**6.** Verwendung gemäß Anspruch 5, **dadurch gekennzeichnet, daß**

- R 1,2-Ethylen und
- x eine positive ganze Zahl von 1 bis 4, bevorzugt 2 oder 3

ist.

**7.** Verwendung gemäß einem der Ansprüche 1 oder 3 bis 6, **dadurch gekennzeichnet, daß** $R^1$ ausgewählt ist aus der Gruppe bestehend aus

- linearem $C_{10}$- bis $C_{30}$-Alkenyl
- verzweigtem $C_9$- bis $C_{30}$-Alkenyl, das durch Polymerisation von $C_3$- und/oder $C_4$-Alkenen erhältlich ist
- verzweigtes Alkenyl, abgeleitet von iso-Buten in einpolymerisierter Form enthaltenden Homo- und Copolymeren mit einem zahlenmittleren Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol.

**8.** Verwendung gemäß einem der Ansprüche 1 oder 3 bis 6, **dadurch gekennzeichnet, daß** es sich bei dem Rest $R^1$ um einen Rest

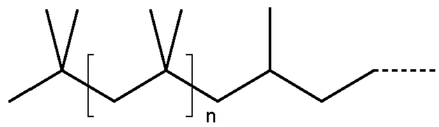

handelt, worin n von 0 bis 960, bevorzugt von 0 bis 94, besonders bevorzugt von 1 bis 46 und ganz besonders bevorzugt von 3 bis 22 ist.

**9.** Verwendung gemäß eindem der vorstehenden Ansprüche zur Verbesserung gleichzeitig mindestens zweier, bevorzugt aller drei der folgenden Eigenschaften

- Nasshaftung
- Abriebsfestigkeit
- Rollwiderstand

von Kautschuke-enthaltenden Reifen.

**10.** Verwendung gemäß einem der Ansprüche 1 bis 9 zur Verringerung von Mikroplastik aus Abrieb von Reifen.

**11.** Verwendung gemäß einem der Ansprüche 1 bis 9 zur Verringerung des Kraftstoffverbrauchs und damit verbundener Emissionen durch Verringerung des Rollwiderstandes von Kautschuke-enthaltenden Reifen.

**12.** Verwendung gemäß einem der vorstehenden Ansprüche, **dadurch gekennzeichnet, daß** es sich bei dem Kautschuk um einen Isobuten-Isopren-Kautschuk handelt.

**13.** Verwendung gemäß einem der Ansprüche 1 bis 11, **dadurch gekennzeichnet, daß** es sich bei dem Kautschuk um einen Styrol-Butadien-Kautschuk handelt.

**14.** Verfahren zur Absenkung der Viskosität von Kautschukmassen in der Herstellung von Kautschuke-enthaltenden Reifen, in dem man

- mindestens einen Kautschuk mit
- Ruß und/oder Silikaten und
- mindestens einem Prozesshilfsmittel und/oder Additiv zur Verbesserung mindestens einer Gebrauchseigenschaft des Reifens

in einem Kneter und/oder Extruder vermischt,
**dadurch gekennzeichnet, dass** man der Kautschukmasse vor und/oder während der Verarbeitung mindestens ein Aminderivat wie beschrieben in einem der Ansprüche 1 bis 8 zusetzt.

**15.** Verwendung von Aminderivaten wie beschrieben in einem der Ansprüche 1 bis 8 zur Absenkung der Viskosität von Kautschukmassen in der Herstellung von Kautschuke-enthaltenden Reifen.

**16.** Kautschukmasse, enthaltend

- mindestens einen Kautschuk, ausgewählt aus der Gruppe bestehend aus Naturkautschuk, Polybutadiene, Styrol-Butadien-Copolymere und Polyisopren und deren Mischungen, bevorzugt Mischungen aus Naturkautschuk und Styrol-Butadien-Copolymeren, aus Naturkautschuk und Polybutadienen oder Naturkautschuk und Polyisoprenen,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis(($C_1$-$C_4$)alkoxy($C_1$-$C_4$)alkylsilyl($C_1$-$C_4$)alkyl)polysulfide, (besonders Disulfide, Trisulfide oder Tetrasulfide), Bis(3-trimethoxysilylpropyl), Bis(3-triethoxysilylpropyl)polysulfid, Bis(3-triethoxysilylpropyl)tetrasulfid (TESPT) der Formel

$[(C_2H_5O)_3Si(CH_2)_3S_2]_2$, und Bis(triethoxysilylpropyl)disulfid (TESPD) der Formel $[(C_2H_5O)_3Si(CH_2)_3S]_2$, und mindestens einem Aminderivat, wie beschrieben in einem der Ansprüche 1 bis 8.

## Claims

**1.** Use of amine derivatives of the formula

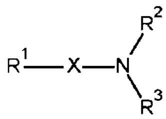

wherein

X is a single bond or an organic spacer,
R1 is a linear or branched alkenyl radical having a molecular weight Mn of 104to 100000 g/mol, preferably from 104 to 10000 g/mol, particularly preferably from
156 to 5000 g/mol and very particularly preferably from 500 to 2500 g/mol
$R^2$ and $R^3$ independently of one another are a further single bond to the organic spacer X, hydrogen, $C_1$- to $C_4$-alkyl, a group -R-NR$^4$R$^5$ or a
repeating radical -[-R-NH-]$_x$--H,
x being a positive integer from 1 to4
R is a divalent organic radical having 2 to 6 carbon atoms,
radical, preferably selected from the group consisting of 1,2-ethylene, 1,2-propylene and 1,3-propylene,
$R^4$ and $R^5$ is independently hydrogen or $C_1$- to $C_4$-alkyl
for improving at least one of the following properties

- dispersion coefficient
- particle size
- wet grip
- abrasion resistance
- rolling resistance
- vulcanization speed

of rubber-containing tires.

**2.** Use according to claim 1, **characterized in that** the amine derivative is a polyisobutene amine of the formula

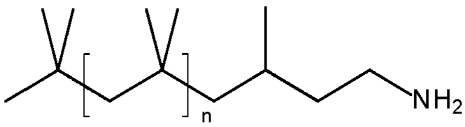

is, wherein n is a positive integer from 0 to 960, preferably from 0 to 94, particularly preferably from 1 to 46 and very particularly preferably from 3 to 22.

**3.** Use according to claim 1, **characterized in that** the amine derivative has the formula

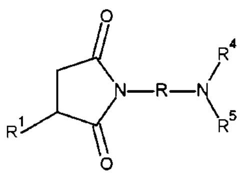

oder

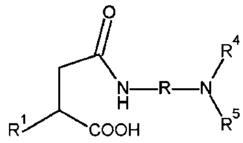

oder

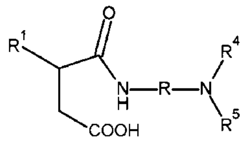

satisfies, wherein
R is a divalent alkylene radical, which may optionally be interrupted by oxygen atoms $R^4$ and $R^5$ are independently of one another hydrogen or $C_1$- to $C_4$-alkyl.

**4.** Use according to claim 3, **characterized in that**

- R is 1,3-propylene and
- $R^4$ and $R^5$ are each $C_1$- to $C_4$-alkyl.

**5.** Use according to claim 1, **characterized in that** the amine derivative has the formula

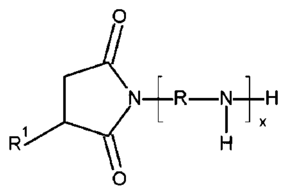

satisfies, wherein

R is a divalent alkylene radical, which is optionally interrupted by oxygen atoms can be and
x is a positive integer from 1 to 4.

**6.** Use according to claim 5, **characterized in that**

- R is 1,2-ethylene and
- x is a positive integer from 1 to 4, preferably 2 or 3.

**7.** Use according to one of claims 1 or 3 to 6, **characterized in that**
$R^1$ is selected from the group consisting of

- linear $C_{10}$- to $C_{30}$-alkenyl
- branched $C_9$- to $C_{30}$-alkenyl, obtainable by polymerization of $C_3$ and/or $C_4$ alkenes
- branched alkenyl, derived from homo- and copolymers containing iso-butene in copolymerized form homo- and copolymers with a number-average molecular weight Mn of 104 to 100000 g/mol, preferably from $10^4$ to 10000 g/mol, particularly preferably from 156 to 5000 g/mol and very particularly preferably from 500 to 2500 g/mol.

**8.** Use according to one of claims 1 or 3 to 6, **characterized in that** the radical $R^1$ is a radical

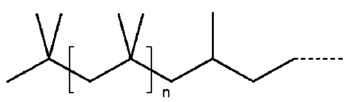

wherein n is from 0 to 960, preferably from 0 to 94, particularly preferably from 1 to 46 and very particularly preferably

from 3 to 22.

**9.** Use according to one of the preceding claims for simultaneously improving at least two, preferably all three, of the following properties

- wet grip
- abrasion resistance
- rolling resistance

of rubber-containing tires.

**10.** Use according to one of claims 1 to 9 for reducing microplastics from tire abrasion.

**11.** Use according to one of claims 1 to 9 for reducing fuel consumption and associated emissions by reducing the rolling resistance of rubber-containing tires.

**12.** Use according to one of the preceding claims, **characterized in that** the rubber is an isobutene-isoprene rubber.

**13.** Use according to one of claims 1 to 11, **characterized in that** the rubber is a styrene-butadiene rubber.

**14.** Process for lowering the viscosity of rubber compounds in the manufacture of rubber-containing tires, in which

- at least one rubber with
- carbon black and/or silicates and
- at least one processing aid and/or additive for improving at least one service property of the tire
is mixed in an internal mixer and/or extruder,
**characterized in that** at least one amine derivative as described in one of claims 1 to 8 is added to the rubber compound before and/or during processing.

**15.** Use of amine derivatives as described in one of claims 1 to 8 for lowering the viscosity of rubber compounds in the manufacture of rubber-containing tires.

**16.** Rubber compound, containing

- at least one rubber, selected from the group consisting of natural rubber, polybutadienes, styrene-butadiene copolymers and polyisoprene and
mixtures thereof, preferably mixtures of natural rubber and styrene-butadiene copolymers, of natural rubber and polybutadienes, or natural rubber and polyisoprenes,
- at least one filler, selected from the group consisting of calcium carbonate, clays, mica, silica, silicates, talc, bentonite, titanium dioxide,

aluminum oxide, zinc oxide and carbon black,

- at least one antioxidant, preferably a p-phenylenediamine,
- at least one peroxide and/or polyamine as hardener and/or crosslinker,
- at least one activator for the vulcanization process selected from the group consisting of amines, diamines, guanidines, thioureas, thiazoles, thiurams, sulfenamides, sulfenimides, thiocarbamates and xanthates,
- at least one silane crosslinker selected from the group consisting of bis(($C_1$-$C_4$)alkoxy($C_1$-$C_4$)alkylsilyl($C_1$-$C_4$) alkyl) polysulfides (especially disulfides, trisulfides or tetrasulfides), bis(3-trimethoxysilylpropyl), bis(3-triethoxysilylpropyl)polysulfide, bis(3-triethoxysilylpropyl)tetrasulfide (TESPT) of the formula $[(C_2H_5O)_3Si(CH_2)_3S_2]_2$, and bis(triethoxysilylpropyl)disulfide (TESPD) of the formula $[(C_2H_5O)_3Si(CH_2)_3S_2]_2$, and at least one amine derivative as described in one of claims 1 to 8.

## Revendications

**1.** Utilisation des dérivées d’amines de la formule

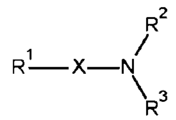

où

X est une liaison simple ou un espaceur organique,
R1a résidu d'alkénile à chaîne droite ou ramifié avec un poids moléculaire Mn de 104 à 100000 g/mol, de préférence de 104 à 10000 g/mol, particulièrement préféré par 156 à 5000 g/mol et surtout de préférence entre 500 et 2500 g/mol
$R^2$ et $R^3$ indépendamment l'un de l'autre, une autre liaison simple avec l'espaceur organique X, l'hydrogène, $C_1$-vers $C_4$-alkyle, un groupe -R-$NR^4R^5$ ou un répétition du reste-[-R-NH-]$_x$--H
x un entier positif de 1 à 4
R est un organisme organique à deux liaisons avec 2 à 6 atomes de carbone Le reste, de préférence sélectionné parmi le groupe composé de 1,2-éthylène, 1,2-propylène et 1,3-propylène,
$R^4$ et $R^5$ sont indépendants de l'hydrogène ou de l'alkyle $C_1$ à $C_4$
pour améliorer au moins une des propriétés suivantes

- Coefficient de dispersion
- Taille des particules
- Adhérence humide
- Résistance à l'abrasion
- Résistance au roulement
- Vitesse de vulcanisation

de pneus contenant du caoutchouc.

**2.** Utilisation selon l'affirmation 1, **caractérisée par le fait que** la dérivée d'amine est un Formule de la polyisobuté-namine

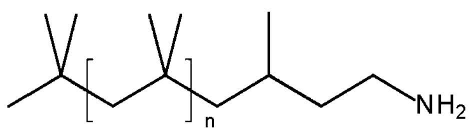

est où n est un entier positif de 0 à 960, de préférence de 0 à 94, particulièrement préféré de 1 à 46, et particulièrement préféré de 3 à 22.

**3.** Utilisation selon l'affirmation 1, **caractérisée par** la dérivée amine Formule

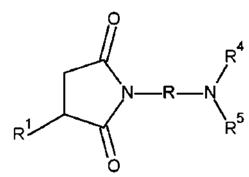

oder

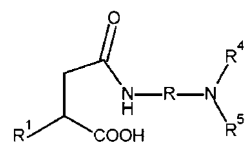

order

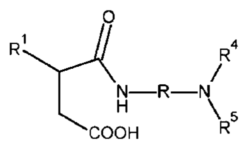

accompli, dans lequel
R est un résidu d'alkylène à deux bandes, qui peut être interrompu par des atomes d'oxygène
$R^4$ et $R^5$ est-ce que l'hydrogène ou $C_1$ à $C_4$ est alkyle
indépendamment l'un de l'autre.

4. Utilisation selon la revendication 3, **caractérisée par**

- R 1,3-propylène et
- $R^4$ et $R^5$ $C_1$ à $C_4$ alkyle.

5. Utilisation selon l'affirmation 1, **caractérisée par** la dérivée d'amine comme la formule

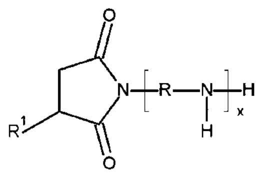

accompli, dans lequel
R est un résidu d'alkylène à deux bandes qui peut être interrompu par des atomes d'oxygène
peuvent et
x est un entier positif de 1 à 4.

6. Utilisation selon la revendication 5, **caractérisée par**

- R 1,2-éthylène et
- x est un entier positif de 1 à 4, de préférence 2 ou 3.

7. utilisation selon l'une des affirmations 1 ou 3 à 6, **caractérisée par le fait que** R1 est sélectionné parmi le groupe composé de

- alkényl linéaire de $C_{10}$ à $C_{30}$
- Alkényle $C_9$ ramifié vers $C_{30}$, obtenu par polymérisation des alcènes $C_3$ et/ou $C_4$
- alkénile ramifié, dérivé d'iso-butène sous une forme polymérisée contenant Homopolymères et copolymères avec un poids moléculaire moyen Mn de 104 à 100 000 g/mol, de préférence entre 104 et 10 000 g/mol, notamment entre 156 et 5000 g/mol et surtout de préférence entre 500 et 2500 g/mol.

8. utilisation selon l'une des affirmations 1 ou 3 à 6, **caractérisée par le fait que** le reste $R^1$ est un reste

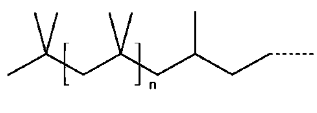

dans lequel n d' 0 bis 960, de préférence d' 0 bis 94, est particulièrement préféré de 1 à 46 et particulièrement de 3 à 22.

9. Utilisation conformément à l'une des revendications ci-dessus pour l'amélioration de la au moins deux, de préférence les trois propriétés suivantes

- Adhérence humide
- Résistance à l'abrasion
- Résistance au roulement

de pneus contenant du caoutchouc.

**10.** Utilisez selon l'une des revendications 1 à 9 pour réduire les microplastiques causés par l'abrasion des pneus.

**11.** Utiliser selon l'une des revendications 1 à 9 pour réduire le Consommation de carburant et émissions associées en réduisant la résistance au roulement des pneus contenant du caoutchouc.

**12.** Utilisation selon l'une des revendications précédentes, **caractérisée par le fait que** le caoutchouc est un caoutchouc Isobutène-Isoprène.

**13.** Utilisation selon l'une des revendications 1 à 11, **caractérisée par le fait que** le caoutchouc est un caoutchouc styrène-butadiène.

**14.** Méthode pour réduire la viscosité des composés de caoutchouc dans la fabrication de ces composés

pneus contenant du caoutchouc, dans lesquels vous pouvez

- au moins un caoutchouc avec
- Ru et/ou silicates, et
- au moins une aide au procédé et/ou un additif pour améliorer au moins une des propriétés de performance du pneu

mélangé dans un pétrisseur et/ou un extruseur,
**caractérisé par le fait qu'**au moins un dérivé d'amine est ajouté au composé de caoutchouc avant et/ou pendant le traitement, comme décrit dans l'une des revendications 1 à 8.

**15.** Utilisation des dérivés d'amines, telle que décrite dans l'une des revendications 1 à 8, pour réduire la viscosité des composés caoutchoucs dans la fabrication du caoutchouc pneus contenus.

**16.** Composé de caoutchouc, contenant

- au moins un caoutchouc sélectionné parmi le groupe composé de caoutchouc naturel, polybutadiène, copolymères styrène-butadiène et polyisoprène, et
leurs mélanges, de préférence des mélanges de caoutchouc naturel et de copolymères styrène-butadiène, caoutchouc naturel et polybutadiène ou caoutchouc naturel et polyisoprènes,
- au moins un remplissage, sélectionné parmi le groupe composé de carbonate de calcium, argiles, mica, silice, silicates, talc, bentonite, dioxyde de titane, Alumine, oxyde de zinc et Ru,
- au moins un antioxydant, de préférence une p-phénylénediamine,
- au moins un peroxyde et/ou polyamine comme durcisseur et/ou réticulant,
- au moins un activateur pour le processus de vulcanisation, sélectionné parmi les groupe composé d'amines, de diamines, de guanidines, de thiourées, de thiatolène, Thiramène, sulfénamides, sulfémiides, thiocarbamates et xanthates,
- au moins un réticulateur de silane sélectionné parmi le groupe composé de bis(($C_1$-$C_4$)alkoxy($C_1$-$C_4$)alkylsilyl($C_1$-$C_4$)alkyl)polysulfures (notamment les disulfures, trisulfures ou tétrasulfures), bis(3-trimethoxysilylpropyl), bis(3-triethoxysilylpropyl)polysulfure, bis(3-triethoxysilylpropyl)tétrasulfure (TESPT) de la formule $[(C_2H_5O)_3Si(CH_2)_3S_2]_2$, et

bis(triethoxysilylpropyl)disulfure (TESPD) de la formule $[(C_2H_5O)_3Si(CH_2)_3S_2]_2$, et au moins une dérivée d'amine, telle que décrite dans l'une des affirmations 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20080214718 A1
- WO 2019199839 A1
- FR 1436607 A
- EP 157703 A
- DE 69206445 T2
- EP 244616 A
- WO 2023152258 A
- WO 2012004300 A
- US 5883196 A
- EP 3263360 A1


### In der Beschreibung aufgeführte Nicht-Patentliteratur


- **GUO et al.** *Journal or Polymer Science, Part A: Polymer Chemistry*, 2013, vol. 51, 4200-4212